Europäisches Patentamt

European Patent Office

Office européen des brevets

(19)

(11) Veröffentlichungsnummer: **0 159 529**
**B1**

(12) **EUROPÄISCHE PATENTSCHRIFT**

(45) Veröffentlichungstag der Patentschrift:
18.10.89

(51) Int. Cl.⁴: **B 23 K 26/00**

(21) Anmeldenummer: 85103094.0

(22) Anmeldetag: 18.03.85

(54) Kunststoffverbundteil, welches eine Aenderung des Materials enthält.

(30) Priorität: 30.03.84 DE 3411797

(43) Veröffentlichungstag der Anmeldung:
30.10.85 Patentblatt 85/44

(45) Bekanntmachung des Hinweises auf die Patenterteilung:
18.10.89 Patentblatt 89/42

(84) Benannte Vertragsstaaten:
DE FR GB IT

(56) Entgegenhaltungen:
DE-B- 2 651 109
DE-B- 2 907 004
GB-A- 1 316 412
US-A- 4 159 414

IBM TECHNICAL DISCLOSURE BULLETIN, Band 12, Nr.
11, April 1970, Seiten 1942-1943, New York, US; M.L.
DAKSS et al.: "Generation of surface wave networks by
optical damage"
LASER FOCUS, Band 18, Nr. 3, März 1982, Seiten 42,44,
Newton, Mass., US; "Three-mirror set-up improves
laser alloying and hardening"
WERKSTATT UND BETRIEB, Band 113, Nr. 12,
Dezember 1980, Seite 830, München, DE; "Beschriftung
mit Laserstrahl"
PROCEEDINGS OF THE IEEE, Band 57, Nr. 2, Februar
1969, Seiten 114-147, New York, US; F.P. GAGLIANO et
al.: "Lasers in Industry"

(73) Patentinhaber: BAYER AG,
D-5090 Leverkusen 1 Bayerwerk (DE)

(72) Erfinder: Fahner, Karsten, Dipl.-Ing.,
Schnarrenbergstrasse 24,
D-7057 Winnenden-Birkmannsweiler (DE)
Erfinder: Depcik, Hans-Werner, Dipl.-Ing.,
Vennstrasse 124 A, D-4000 Düsseldorf 22 (DE)

## Beschreibung

Die Erfindung betrifft ein Kunststoffverbundteil, welches eine Änderung des Materials, insbesondere eine Kennzeichnung unterhalb des Oberflächenbereiches mittels Laserstrahl enthält.

Für einige Kunststoffteile ist eine sichtbare oder unsichtbare Beschriftung zur Kennzeichnung ihrer Funktion notwendig, damit diese entsprechend betätigt (z.B. Tasten) oder elektronisch abgefragt werden kann.

Kunststoffteile, bei denen die Kennzeichnungen im Tampoprint-, Siebdruck- und Transferprint-Verfahren aufgebracht werden, haben den Nachteil, dass durch mechanische Verletzung (Kratzer), Abrieb und chemische Angriffe die Kennzeichnung unleserlich werden kann und damit ihre Funktion nicht mehr erfüllt. Auch ist die Anbringung von Schrift insbesondere bei gewölbten oder strukturierten Oberflächen schwierig. Die Werkzeug- bzw. Klischeekosten sind bei Einzelfertigung recht hoch.

Bekannt sind ferner Kunststoffteile, bei denen die Kennzeichnung im Zweifarben-Spritzguss-Verfahren hergestellt wird. Dieses Verfahren ist für kleine Serien unwirtschaftlich, da für jede Farbe komplizierte eigene Werkzeuge erforderlich sind. Die Rüstkosten sind hoch. Eine Änderung der Kennzeichnung ist aufwendig. Das Verfahren ist deshalb nur für grosse Stückzahlen geeignet.

Es sind auch Kunststoffteile bekannt, bei denen die Kennzeichnung bzw. Beschriftung in die Oberfläche mittels Laserstrahl eingebrannt wird. Dies hat den Nachteil, dass die rauhe Oberfläche wegen der Verschmutzungsgefahr und der unangenehmen Griffigkeit mit einem transparenten Lack versehen werden muss, was bei Massenprodukten sehr aufwendig und damit kostspielig ist.

Aus DE-B 2 907 004 ist eine Ausweiskarte bekannt, welche aus einem Kunststoffverbundteil mit einem für Laserstrahlen transparenten Oberflächenbereich und einem darunterliegenden, die Kennzeichnung tragenden Bereich besteht. Für die Fälschungssicherheit ist es ausserordentlich wichtig, dass die beiden Bereiche sich nicht trennen und nicht wieder verbinden lassen. Die Qualität der Kennzeichnung hängt ausserdem von den verwendeten Materialien, der Stärke der Bereiche und der Wellenlänge der verwendeten Strahlung ab.

Es besteht die Aufgabe, ein Kunststoffverbundteil der eingangs genannten Art zu schaffen, bei welchem bei einfacher Herstellung, Aufbau und Kennzeichnung, Klarheit und Schärfe dieser Kennzeichnung sowie die Fälschungssicherheit verbessert ist.

Gelöst wird diese Aufgabe durch ein Kunststoffverbundteil, bestehend aus einem Oberflächenbereich mit einer Schichtstärke von 0,1 bis 2 mm, einem Licht-Transmissionsgrad $\tau$ grösser als 0,8, insbesondere grösser als 0,9, bei einer Wellenlänge von 1000 bis 20000 $\mu m$ und einem nachfolgenden, die Kennzeichnung aufnehmenden Materialbereich, welcher innerhalb von 3 mm Tiefe einen Lichtabsorptionsgrad grösser als 80% der einfallenden Laserstrahlen besitzt, wobei das Kunststoffverbundteil aus einer Kombination einer Schicht aus Cellulose-Acetat mit einer Schicht aus Acrylnitril-Butadien-Styrol-Copolymerisat, aus Cellulose-Acetat oder aus Ethylenvinylacetat-Copolymerisat bzw. aus einer Kombination aus einer Schicht aus Polycarbonat mit einer Schicht aus Acrylnitril-Butadien-Styrol-Copolymerisat oder aus Polycarbonat besteht und eine nachträglich eingebrachte Änderung des Materials enthält.

Für den Fachmann ist es überraschend, mehrere Schichten mit verschiedenen Absorptions-Koeffizienten – beispielsweise nach dem 2-Komponenten-Verfahren – so zu kombinieren, dass ein Laserstrahl durch den oberen, vorwiegend transparenten Bereich aus Kunststoff ohne grosse Verluste an Energie ($\leqslant 10$) und damit ohne Beeinflussung des Stoffes hindurchtritt, um dann im folgenden von aussen nicht unmittelbar zugängigen Bereich von dem Werkstoff, insbesondere Kunststoff, auf kürzestem Wege so stark absorbiert zu werden, dass die dort entstehende Wärme eine Änderung der Farbe und Wandlung des Molekularaufbaus bzw. eine Zerstörung (Einschnitt) des Werkstoffes hervorruft. Mit programmgeführter Laserstrahlung kann nach diesem Verfahren eine klar umrissene, jederzeit wieder abrufbare Beschriftung schnell und wirtschaftlich erfolgen. Die Konturen sind so scharf, dass die eingebrannten Kennzeichen im Inneren des Materialbereiches jederzeit magnetisch und/oder optisch wieder einwandfrei lesbar sind. Eine äussere Beeinflussung der Lesbarkeit ist durch die glatte Oberfläche nicht gegeben. Auch dürften die Zeichen wegen Unlöschbarkeit gegen Fälschung sicher sein. Der obere Kunststoff, der durchsichtig fürs Auge oder opak für elektronische Abfrage sein kann, wirkt dabei als Wellenfenster, dessen glatte äussere Oberfläche die im Innern liegende Kennzeichnung gegen mechanische oder chemische Angriffe sowie Verschmutzung schützt. Eine nachträgliche Veränderung der Kennzeichnung ist ohne Zerstörung kaum möglich. Darüber hinaus können insbesondere in einer reflektierenden Schicht des Materialbereiches Unterbrechungen gezielt erzeugt werden, deren Anordnung später wieder digital abgefragt werden kann. Mit steigender Wellenlänge lässt sich der Effekt bis zum Durchschneiden steigern. Für eine Beschriftung hat sich die Wellenlänge von 1,06 $\mu m$ als besonders geeignet herausgestellt. Es lassen sich auch mehrere Laserstrahlen in einem Einsatzpunkt fokussieren. Durch die Bündelung der Laserstrahlen an der zu bearbeitenden Stelle wird dort eine hohe Energie erzeugt, so dass die gewünschten Änderungen sehr schnell erfolgen, wodurch die Arbeitsgeschwindigkeit erhöht wird.

Durch eine programmierte Steuerung des Laserstrahls ist es möglich, die Kunststoffverbundteile einfach und schnell zu kennzeichnen.

Das Kunststoffverbundteil kann entsprechend der vorgegebenen Führung des Laserstrahlers einen karbonisierten Leitweg enthalten.

Durch Karbonisierung von beispielsweise Polyacrylnitril unter Sauerstoffabschluss wird als leitender Stoff (Leitfähigkeit 10–100 Ω/cm) Kohle erzeugt, die als elektrischer Leiter genutzt werden kann, so dass auf diese Weise Leiter-Platinen hergestellt werden können.

Der die Kennzeichnung tragende Materialbereich kann metallische Einschlüsse aufweisen. Metallische Einschlüsse, die in Form von Aufdampfung, Pulver, Flakes oder Folien vorliegen können, haben den Vorteil, dass nach der Veränderung die elektrische Leitfähigkeit bzw. der Reflexionsgrad zur Informationsübermittlung genutzt werden können.

### Beispiel

Der Versuch wird mit einem YAG-Laser durchgeführt, der folgende Kenndaten aufweist

| | |
|---|---|
| Wellenlänge | 1,06 μm ≙ 1060 μm |
| Frequenz | 15 KHz |
| Leistung | 6 W |
| Belichtungsgeschwindigkeit | 200 mm/s |
| Stromstärke | 15 A |

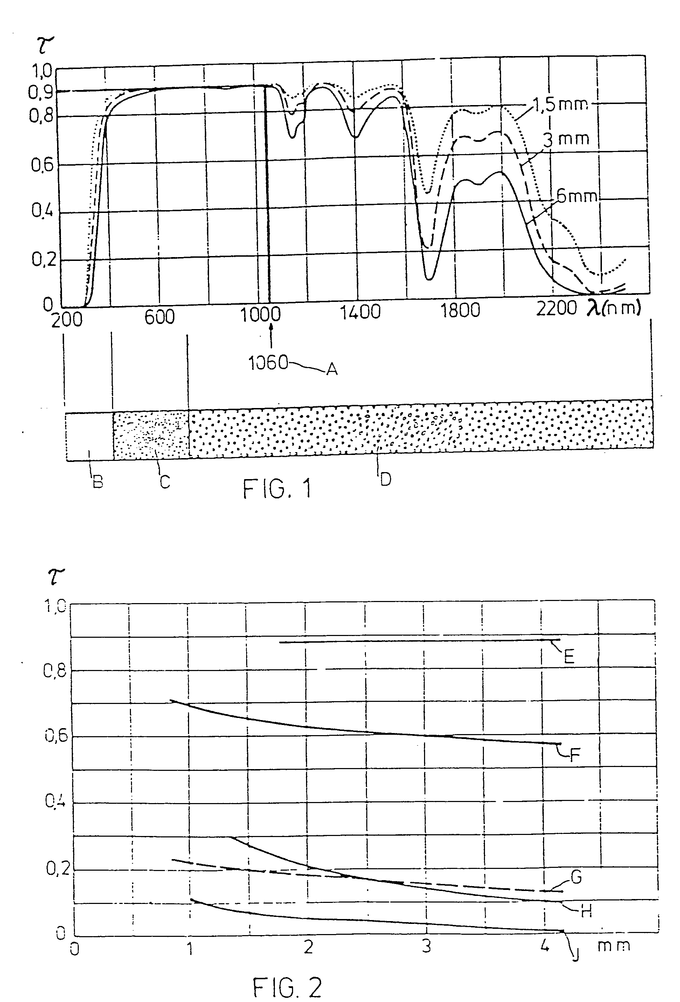

Das Kunststoffteil besteht aus einem natur Polycarbonat (Makrolon 3100) in Fig. 1 und das gleiche mit Signal eingefärbte Polycarbonat (Makrolon 3100) (Absorptionsgrad Signalblau >90%) in Fig. 2.

Die gewünschten Ziffern und geometrischen Zeichen werden in einem Zeichengenerator im Mikrocomputer abgespeichert. Der Programmieraufwand kann in wenigen Minuten durchgeführt werden, Zahlen oder Ziffern-Kombinationen mit geometrischen Zeichen werden über die Tastatur des Terminals zu Programmen zusammengestellt. Die Archivierung erfolgt über eine Mini-Floppy-Disc. Pro Sekunde werden ca. 15 Zeichen mit 2 mm Zeichenhöhe geschrieben. Der fokussierte Laserstrahl brennt gut lesbare und kratzfeste Schriftzeichen in das Werkstück. Die Laserstrahlbeschriftung ermöglicht die Beschriftung unserer Thermoplaste (Fertigteile, Halbzeuge, Folien) ohne Vor- und Nachbehandlung, gratfrei und an allen optisch erreichbaren Stellen. Höchste Produktionsraten sind möglich. Wird die Frequenz im Bereich 10–20 KHz variiert, so ist generell festzustellen, dass bei Zunahmen der Frequenz (Impulse/s) die Leistung geringer wird, wodurch graue bis hellgraue Schriftqualität wegen der geringen Absorption entsteht. Die Belichtungsgeschwindigkeit sollte möglichst zwischen 150 mm/s und 300 mm/s liegen, da im ersten Fall eine tiefschwarze Schrift entsteht, die allmählich dann bei Änderung der Belichtungsgeschwindigkeit in Grautöne übergeht. Mit steigender Stromstärke (10–18 A) nimmt die Absorption und damit Dunkelheit der Beschriftung zu. Die vorgenannten Parameter sind auf den jeweiligen Werkstoff zwecks Optimierung einzustellen. Als Kunststoffe sind unter anderem hochmolekulare, thermoplastische, aromatische Polycarbonate mit $M_w$ (mittleres Molekulargewicht) 10 000–20 000, vorzugsweise 20 000–80 000, insbesondere auf der Basis Bisphenol A einzusetzen, wobei sich insbesondere Thermoplaste mit geringer Kriechstromfestigkeit (KC 250) bzw. mit hohem Absorptionsgrad durch zugesetzte Pigmente eignen.

### Patentanspruch

Kunststoffverbundteil, bestehend aus einem Oberflächenbereich mit einer Schichtstärke von 0,1 bis 2 mm, einem Licht-Transmissionsgrad τ grösser als 0,8, insbesondere grösser als 0,9, bei einer Wellenlänge von 1000 bis 20 000 μm und einem nachfolgenden, die Kennzeichnung aufnehmenden Materialbereich, welcher innerhalb von 3 mm Tiefe einen Lichtabsorptionsgrad grösser als 80% der einfallenden Laserstrahlen besitzt, wobei das Kunststoffverbundteil aus einer Kombination einer Schicht aus Cellulose-Acetat mit einer Schicht aus Acrylnitril-Butadien-Styrol-Copolymerisat, aus Cellulose-Acetat oder aus Ethylenvinylacetat-Copolymerisat bzw. aus einer Kombination aus einer Schicht aus Polycarbonat mit einer Schicht aus Acrylnitril-Butadien-Styrol-Copolymerisat oder aus Polycarbonat besteht und eine nachträglich durch den Laserstrahl eingebrachte Änderung des Materials enthält.

### Claim

1. A composite plastics element consisting of a surface region having a layer thickness of 0.1 to 2 mm, a light transmission degree τ of greater than 0.8, more especially greater than 0.9 at a wavelength of 1000 to 20,000 μm and a following material region accommodating the identification which, within a depth of 3 mm, has a degree of light absorption of greater than 80% of the incident laser beams, the composite plastics element consisting of a combination of a layer of cellulose acetate with a layer of acrylonitrile/butadiene/styrene copolymer, of cellulose acetate or of ethylene/vinyl acetate copolymer or of a combination of a layer of polycarbonate with a layer of acrylonitrile/butadiene/styrene copolymer or of polycarbonate and containing a change in the material subsequently introduced by the laser beam.

### Revendication

Pièce composite en matière plastique, constituée d'une zone de surface ayant une épaisseur de couche de 0,1 à 2 mm, un degré τ de transmission de lumière supérieur à 0,8, notamment supérieur à 0,9 pour une longueur d'onde de 1000 à 20 000 μm, suivie d'une zone de matière recevant les signes distinctifs, qui possède dans les limites d'une profondeur de 3 mm un degré d'absorption de lumière supérieur à 80% des rayons laser incidents, la pièce composite en matière plastique étant constituée de l'association d'une couche d'acétate de cellulose à une couche d'un copolymérisat acrylonitrile-butadiène-styrène, d'acétate de cellulose ou d'un copolymère éthylène-acétate de vinyle ou de l'association d'une couche de polycarbonate à une couche de copolymérisat acrylonitrile-butadiène-styrène ou d'un polycarbonate et comportant une modification de la matière créée ultérieurement par le faisceau laser.

FIG. 1

FIG. 2